(19) Europäisches Patentamt
European Patent Office
Office européen des brevets

(11) Veröffentlichungsnummer: **0 003 610**
**B1**

(12) # EUROPÄISCHE PATENTSCHRIFT

(45) Veröffentlichungstag der Patentschrift: **25.11.81**

(51) Int. Cl.³: **C 08 G 77/06,** C 08 G 77/18

(21) Anmeldenummer: **79100422.9**

(22) Anmeldetag: **13.02.79**

(54) **Verfahren zum Herstellen von Polysiloxanen mit über Sauerstoff an Silicium gebundenen Kohlenwasserstoffresten.**

(30) Priorität: **14.02.78 DE 2806036**

(43) Veröffentlichungstag der Anmeldung: **22.08.79 Patentblatt 79/17**

(45) Bekanntmachung des Hinweises auf die Patenterteilung: **25.11.81 Patentblatt 81/47**

(84) Benannte Vertragsstaaten: **BE CH DE FR GB IT NL**

(56) Entgegenhaltungen:
**DE-A-1 795 182**
**DE-A-1 937 736**
**FR-A-1 077 230**
**FR-A-1 105 714**
**GB-A-1 058 334**
**US-A-3 668 180**
**US-A-3 779 987**

(73) Patentinhaber: **WACKER-CHEMIE GMBH, Prinzregentenstrasse 22, D-8000 München 22 (DE)**

(72) Erfinder: **Graf, Werner, Dr., Ludwig-Thoma-Strasse 21, D-8263 Burghausen (DE)**
Erfinder: **Frey, Volker, Dr., Asternweg 7a, D-8263 Burghausen (DE)**
Erfinder: **John, Peter, Dr., Marienberger Strasse 80, D-8263 Burghausen (DE)**
Erfinder: **Zeller, Norbert, Dr., Schweitzerstrasse 5, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 610 B1

BUNDESDRUCKEREI BERLIN

# Verfahren zum Herstellen von Polysiloxanen mit über Sauerstoff an Silicium gebundenen Kohlenwasserstoffresten

Aus GB-PS 674 137, wobei diese Druckschrift der FR-PS 1 028 026 entspricht, ist es bereits bekannt, Alkoxypolysiloxane durch Umsetzung von Halogensilan mit Alkohol und Wasser in Gegenwart des gewünschten Polysiloxans herzustellen. Gegenüber diesem bekannten Verfahren hat das erfindungsgemäße Verfahren insbesondere die Vorteile, daß es leichter zu steuern ist und Polysiloxane mit gleichbleibendem, beliebig abgestuftem und vorbestimmtem Gehalt an über Sauerstoff an Silicium gebundenen Kohlenwasserstoffresten, insbesondere Alkoxygruppen, und Si-gebundenen Hydroxylgruppen und geringerem Gehalt an Halogenwasserstoff ergibt sowie nicht nur auf Tetrahalogensilane, sondern auch auf Organohalogensilane anwendbar ist.

Gegenstand der Erfindung ist ein Verfahren zum Herstellen von Polysiloxanen mit über Sauerstoff an Silicium gebundenen Kohlenwasserstoffresten durch Umsetzung von Halogensilan mit Alkohol und Wasser in Gegenwart des gewünschten Polysiloxans, dadurch gekennzeichnet, daß in eine mit einer Kolonne und gegebenenfalls Rückflußkühler ausgestattete und breits gewünschte Polysiloxan enthaltende Blase stetig Alkohol, Wasser und erforderlichenfalls saurer Katalysator, der die Kondensation von Si-gebundenen, kondensationsfähigen Gruppen fördert, in solchen Mengen eingeführt werden, daß in der Blase mindestens 5 Gewichtsprozent Alkohol und 0,001 bis 5 Gewichtsprozent Katalysator, jeweils bezogen auf das Gesamtgewicht von in der Blase vorhandenem Alkohol, Katalysator und Polysiloxan vorliegen, der Inhalt der Blase zum Sieden unter Rückfluß erhitzt, umzusetzendes Halogensilan mindestens 1 m oberhalb des unteren Kolonnenendes in die Kolonne eingeführt und Polysiloxan im Maße seiner Bildung stetig aus der Blase abgezogen wird.

Als Halogensilane können auch im Rahmen des erfindungsgemäßen Verfahrens alle Halogensilane eingesetzt werden, die bei bisher bekannten Verfahren zum Herstellen von Polysiloxanen mit über Sauerstoff an Silicium gebundenen Kohlenwasserstoffresten durch Umsetzung von Halogensilan mit Alkohol und Wasser eingesetzt werden konnten. Es sind dies insbesondere Verbindungen der allgemeinen Formel

$$R_nSiX_{4-n},$$

worin R gleiche oder verschiedene, einwertige Atome oder Gruppen, die gegenüber jeweils eingesetztem Alkohol; Katalysator und Wasser unter den jeweiligen Reaktionsbedingungen inert sind, X Chlor oder Brom, vorzugsweise Chlor, und n 0, 1, 2 oder 3, vorzugsweise 0, 1 oder 2, bedeutet. Weitere Beispiele für im Rahmen der Erfindung einsetzbare Halogensilane sind solche der allgemeinen Formel

$$X_{3-m}R_mSiR'SiR_mX_{3-m},$$

worin R und X jeweils die oben dafür angegebene Bedeutung haben, R' einen zweiwertigen Kohlenwasserstoffrest, z. B. den Äthylrest oder einen Phenylenrest, bedeutet und m 0, 1 oder 2 ist.

Beispiele für R sind Wasserstoff und insbesondere einwertige Kohlenwasserstoffreste mit 1 bis 10 Kohlenstoffatomen, z. B. Alkylreste, wie der Methyl-, Äthyl-, n-Propyl-, n-Butyl- und sec. Butylrest, Pentyl-, Octyl- und Decylreste; Alkenylreste, wie der Vinyl- und Allylrest; Arylreste, wie der Phenylrest; Alkarylreste, wie Tolylreste; und Aralkylreste, wie der Benzylrest; ferner durch gegenüber jeweils eingesetztem Alkohol, Katalysator und Wasser unter den jeweiligen Reaktionsbedingungen inerter Atome oder Gruppen substituierte, einwertige Kohlenwasserstoffreste mit 1 bis 10 Kohlenstoffatomen, wie Halogenalkylreste, bei denen die Kohlenstoffatome, an die Halogen gebunden ist, in alpha- oder mindestens gamma-Stellung zum Si-Atom stehen, z. B. der gamma-Chlorpropylrest; und Halogenarylreste, z. B. Chlorphenylreste.

Wegen der leichten Zugänglichkeit ist n vorzugweise 0, bzw. R vorzugsweise der Methylrest. Bevorzugt als Halogensilane im Rahmen der Erfindung sind somit Tetrachlorsilan, Methyltrichlorsilan und Dimethyldichlorsilan. Es können Gemische verschiedener Halogensilane verwendet werden. Werden Halogensilane eingesetzt, bei denen n den Wert 3 hat, so müssen Gemische aus mindestens einem solchen Halogensilan und mindestens einem Halogensilan, bei dem n 0,1 oder 2 ist, eingesetzt werden, weil sonst keine Polysiloxane mit über Sauerstoff an Silicium gebundenen Kohlenwasserstoffresten entstehen können.

Silan kann in flüssiger oder verdampfter Form in die Kolonne eingeführt werden.

Als Alkohole sind im Rahmen des erfindungsgemäßen Verfahrens solche der allgemeinen Formel

$$R''OH$$

bevorzugt, worin R'' ein einwertiger, aliphatischer Kohlenwasserstoffrest mit 1 bis 8 Kohlenstoffatomen ist.

Die oben angegebenen Beispiele für aliphatische Kohlenwasserstoffreste R, soweit sie 1 bis 8 Kohlenstoffatome enthalten, gelten mit Ausnahme des Vinylrestes auch für die Reste R''. Bevorzugt als Reste R'' sind jedoch Alkylreste. Auch die Kohlenwasserstoffreste R'' können durch gegenüber den jeweils eingesetzten Halogensilanen, Wasser und Katalysator unter den jeweiligen Reaktionsbedingungen inerte

Atome oder Gruppen substituiert sein. Beispielhaft für im Rahmen der Erfindung verwendbare Alkohole sind Methanol, Äthanol, n-Propanol, Isopropanol, beta-Methoxyäthanol, n-Hexanol und 2-Äthylhexanol. Es können Gemische aus verschiedenen Alkoholen eingesetzt werden.

Vorzugsweise liegen in der Blase höchstens 60 Gewichtsprozent Alkohol, bezogen auf das Gesamtgewicht von Alkohol, Katalysator und in der Blase vorhandenem Polysiloxan, vor. Größere Mengen schaden nicht, bringen aber auch keinen Vorteil.

Wasser wird bei dem erfindungsgemäßen Verfahren vorzugsweise in Mengen von 0,12 bis 0,49 Mol je Grammatom Si-gebundenen Halogenatoms eingesetzt.

Es können beliebige saure Katalysatoren, welche die Kondensation von Si-gebundenen, kondensationsfähigen Gruppen fördern, eingesetzt werden. Beispiele für solche Katalysatoren sind anorganische und organische Wasserstoffsäuren, wie Chlorwasserstoffsäure, Phophorsäure und Essigsäure; Lewis-Säuren, wie Eisentrichlorid und Aluminiumtrichlorid; Phosphornitridchloride sowie säureaktivierte Bleicherden und Kationenaustauscher in der H-Form.

Es können Gemische aus verschiedenen Katalysatoren eingesetzt werden. Wenn dafür Sorge getragen wird, daß der Katalysator nicht mit dem gewünschten Polysiloxan aus der Blase ausgetragen wird, was z. B. durch Verwendung von granulierter, säureaktivierter Bleicherde und einem Sieb an der Stelle, an der das Polysiloxan aus der Blase ausgetragen wird, möglich ist, ist die stetige Zufuhr von Katalysator zu dem Gemisch in der Blase natürlich nicht erforderlich.

Gemäß einer bevorzugten Ausführungsform des erfindungsgemäßen Verfahrens wird in der Blase vor Einführung von umzusetzendem Halogensilan in die Kolonne und vor Zugabe von Wasser in die Blase ein Gemisch aus dem gewünschten Polysiloxan oder Polysiloxan, das zumindest etwa die gleiche Anzahl von Siloxaneinheiten und Alkoxygruppen wie das gewünschte Polysiloxan hat, 5 bis 60 Gewichtsprozent Alkohol und 0,001 bis 5 Gewichtsprozent saurem Katalysator, wobei sich die vorstehend genannten Prozentsätze jeweils auf das Gesamtgewicht von Polysiloxan, Alkohol und Katalysator beziehen, zum Sieden unter Rückfluß erhitzt.

Als Kolonne kann im Rahmen des erfindungsgemäßen Verfahrens jedes, meist mit Füllungen oder Einbauten versehene Rohr verwendet werden, das auch bei der fraktionierten Destillation zum Fraktionieren eingesetzt werden kann, beispielsweise eine Füllkörperkolonne. Wegen der Forderung, daß umzusetzendes Halogensilan mindestens 1 m oberhalb des unteren Kolonnenendes in die Kolonne eingeführt wird, muß die Kolonne auch mindestens 100 cm lang sein. Eine entscheidende obere Grenze für die Kolonnenlänge besteht nicht. Wenn die Kolonne zu kurz ist, um einen ausreichenden Rückfluß bereits in der Kolonne zu gewährleisten, muß sie natürlich auch mit einem Rückflußkühler ausgestattet sein.

Das erfindungsgemäße Verfahren wird vorzugsweise beim Druck dr umgebenden Atmosphäre, d. h. bei 1 bar oder etwa 1 bar durchgeführt, weil beim Arbeiten unter dem Druck der umgebenden Atmosphäre der Aufwand z. B. für korrosionsfeste Pumpen entfällt. Es kann jedoch, falls es die Lage der Siedepunkte von Reaktionsteilnehmern erfordert oder zweckmäßig macht, auch bei höheren oder niedrigeren Drücken gearbeitet werden.

Aus dem aus der Blase abgezogenen Polysiloxan kann nichtumgesetzter Alkohol beispielsweise in einem Dünnschichtverdampfer oder auch mit einer einfacheren Destilliervorrichtung abdestilliert werden. Der abdestillierte Alkohol kann wieder in die Blase zurückgeführt werden.

Vor dem Abdestillieren des Alkohols oder danach kann, falls erforderlich, Katalysator aus dem Polysiloxan abgetrennt werden. Dies kann z. B. durch Filtration durch Natriumcarbonat oder Zinkspäne erfolgen.

## Beispiel 1

In einer 100 l-Blase, auf die eine Kolonne mit einer Länge von 4 m und einer lichten Weite von 10 cm, die mit Raschigringen mit einem Durchmesser von 5 mm gefüllt ist, aufgesetzt ist, werden zunächst 50 kg eines Gemisches aus 69,98 Gewichtsprozent Polyäthylsilikat mit einem $SiO_2$-Gehalt von 40 Gewichtsprozent, 30 Gewichtsprozent Äthanol und 0,02 Gewichtsprozent Chlorwasserstoff zum Sieden unter Rückfluß erhitzt. Dann werden in die Blase je Stunde 12 l Äthanol, 0,6 l Wasser und 0,02 l konzentrierte Salzsäure und 3,50 m oberhalb des unteren Kolonnenendes in die Kolonne je Stunde 10 l Siliciumtetrachlorid eingeleitet und Polysiloxan im Maße seiner Bildung stetig aus der Blase abgezogen. Das aus der Blase abgezogene Polysiloxan wird durch Erhitzen auf 160°C in einer anderen beheizten Blase von nichtumgesetztem Äthanol befreit und das dabei abdestillierte Äthanol in die Blase zurückgeführt, in der die Umsetzung mit Halogensilan stattfindet, wobei diese Menge in den vorstehend angegebenen 12 l je Stunde enthalten ist.

Das so erhaltene Polyäthylsilikat hat ebenfalls einen $SiO_2$-Gehalt von 40 Gewichtsprozent. Es enthält weiterhin 1,5 Gewichtsprozent Si-gebundener Hydroxylgruppen und es hat eine Viskosität von 4 cSt (0,004 $mm^2 \cdot s^{-1}$) bei 23°C. HCl-Gehalt: 20 mg/l.

## Beispiel 2

Die in Beispiel 1 beschriebene Arbeitsweise wird wiederholt, mit der Abänderung, daß je Stunde an Stelle von 0,02 l konzentrierter Salzsäure 0,2 l konzentrierte Salzsäure in die Blase eingeführt werden.

Das so erhaltene Polyäthylsilikat hat ebenfalls

einen $SiO_2$-Gehalt von 40 Gewichtsprozent. Es enthält weiterhin 0,7 Gewichtsprozent Si-gebundener Hydroxylgruppen. HCl-Gehalt: 150 mg/l.

Beispiel 3

Die in Beispiel 1 beschriebene Arbeitsweise wird wiederholt, mit den Abänderungen, daß je Stunde anstelle von 0,6 l Wasser nur 0,35 l Wasser und zusätzlich 1 g Eisentrichlorid in die Blase eingeführt werden.

Das so erhaltene Polyäthylsilikat hat einen $SiO_2$-Gehalt von 35 Gewichtsprozent. Es enthält 0,15 Gewichtsprozent Si-gebundener hydroxylgruppen. HCl-Gehalt: 200 mg/l.

Beispiel 4

In der 100 l-Blase, auf die eine Kolonne mit einer Länge von 4 m und einer lichten Weite von 10 cm, die mit Raschigringen mit einem Durchmesser von 5 mm gefüllt ist, aufgesetzt ist, werden zunächst 50 kg eines Gemisches aus 70 Gewichtsprozent Monomethyläthoxypolysiloxan der durchschnittlichen Formel $CH_3SiO_{1,1}(OC_2H_5)_{0,8}$, 29,99 Gewichtsprozent Äthanol und 0,01 Gewichtsprozent Chlorwasserstoff zum Sieden unter Rückfluß erhitzt. Dann werden in die Blase je Stunde 5 l Äthanol, 0,4 l Wasser und 0,01 l konzentrierte Salzsäure und 3,50 m oberhalb des unteren Kolonnenendes in die Kolonne je Stunde 10 l Methyltrichlorsilan eingeleitet und Polysiloxan im Maße seiner Bildung stetig aus der Blase abgezogen. Das aus der Blase abgezogene Polysiloxan wird durch Erhitzen auf 160° C in einer anderen beheizten Blase von nichtumgesetztem Äthanol befreit. Das dabei abdestillierte Äthanol wird in die Blase, in der die Umsetzung mit Halogensilan stattfindet, zurückgeführt, wobei diese Menge in den vorstehend angegebenen 5 l je Stunde enthalten ist.

Das so erhaltene Monomethyläthoxypolysiloxan enthält 0,15 Gewichtsprozent Si-gebundener hydroxylgruppen. Es hat eine Viskosität von 25 cSt ($0,025\ mm^2 \cdot s^{-1}$) bei 23° C. HCl-Gehalt: 40 mg/l. Der Glührückstand sind 60 Gewichtsprozent $SiO_2$.

Vergleichsversuch 1

Die in Beispiel 1 beschriebene Arbeitsweise wird wiederholt, mit der Abänderung, daß das in der Blase zunächst erhitzte Gemisch statt 30 Gewichtsprozent Äthanol nur 3 Gewichtsprozent Äthanol enthält. Nach kurzer Betriebszeit ist das aus der Blase abgezogene Polysiloxan trüb, weil sich Siliciumdioxyd in sehr feiner Form abscheidet, das nur sehr schwierig abgetrennt werden kann. HCl-Gehalt: 20 mg/l.

Vergleichsversuch 2

Die in Beispiel 1 beschriebene Arbeitsweise wird wiederholt mit der Abänderung, daß die stetige Zugabe von konzentrierter Salzsäure unterbleibt. Das aus der Blase abgezogene Polysiloxan ist zunehmend viskoser. Nach 2 Stunden Betriebszeit ist das Polysiloxan in der Blase geliert.

Vergleichsversuch 3

In GB-PS 6 74 137, Beispiel 1, ähnlicher Arbeitsweise werden aus 2 Tropftrichtern gleichzeitig Methyltrichlorsilan mit einer Geschwindigkeit von 200 ml je Stunde und ein Gemisch aus 12,5 Gewichtsteilen Äthanol und 1 Gewichtsteil Wasser mit einer Geschwindigkeit von 108 ml je Stunde zu einem auf 45° C erwärmten Gemisch aus 100 g Monomethyläthoxypolysiloxan der durchschnittlichen Formel $CH_3SiO_{1,1}(OC_2H_5)_{0,8}$ und 100 g Äthanol in einem 500 ml-Glaskolben unter Rühren gegeben. Das Produkt wird über einen Überlauf abgezogen. nach 15 Minuten Zeit ist der Inhalt des Kolbens geliert.

Vergleichsversuch 4

Entsprechend GB-PS 6 74 137, Beispiel 1, werden aus 2 Tropftrichtern gleichzeitig 320 ml Silicumtetrachlorid und 800 ml eines Gemisches aus 95 Gewichtsprozent Äthanol und 5 Gewichtsprozent Wasser zu 230 ml Polyäthylsilikat mit einem $SiO_2$-Gehalt von 40 Gewichtsprozent, das auf 45° C erwärmt ist, in einem 2 l-Glaskolben unter Rühren innerhalb von 5 Minuten gegeben. Der Glaskolben ist mit einem rückflußkühler verbunden. Nach Beendigung der Zugabe von Siliciumtetrachlorid und des Äthanol-Wasser-Gemisches wird durch Erwärmen auf bis zu 150° C überschüssiger Alkohol abdestilliert.

Das so erhaltene Polyäthylsilikat hat einen $SiO_2$-Gehalt von 44 Gewichtsprozent, enthält 1400 mg/l HCl und weniger als 0,1 Gewichtsprozent Si-gebundene Hydroxylgruppen.

**Patentansprüche**

1. Verfahren zum Herstellen von Polysiloxanen mit über Sauerstoff an Silicium gebundenen Kohlenwasserstoffresten durch Umsetzung von Halogensilan mit Alkohol und Wasser in Gegenwart des gewünschten Polysiloxans, dadurch gekennzeichnet, daß in eine mit einer Kolonne und gegebenenfalls Rückflußkühler ausgestattete und bereits gewünschtes Polysiloxan enthaltende Blase stetig Alkohol, Wasser und erforderlichenfalls saurer Katalysator, der die Kondensation von Si-gebundenen, kondensationsfähigen Gruppen fördert, in selchen Mengen eingeführt werden, daß in der Blase mindestens 5 Gewichtsprozent Alkohol und 0,001 bis 5

Gewichtsprozent Katalysator, jeweils bezogen auf das Gesamtgewicht von in der Blase vorhandenem Alkohol, Katalysator und Polysiloxan vorliegen, der Inhalt der Blase zum Sieden unter Rückfluß erhitzt, umzusetzendes Halogensilan mindestens 1 m oberhalb des unteren Kolonnenendes in die Kolonne eingeführt und Polysiloxan im Maße seiner Bildung stetig aus der Blase abgezogen wird.

2. Verfahren nach Anspruch 1, dadurch gekennzeichnet, daß in die Blase Alkohol in solchen Mengen eingeführt wird, daß in der Blase höchstens 60 Gewichtsprozent Alkohol, bezogen auf das Gesamtgewicht von Alkohol, Katalysator und Polysiloxan vorliegen.

3. Verfahren nach Anspruch 1, dadurch gekennzeichnet, daß in der Blase vor Einführung von umzusetzendem Halogensilan in die Kolonne und vor Zugabe von Wasser in die Blase ein Gemisch aus dem gewünschten Polysiloxan oder Polysiloxan, das zumindest etwa die gleiche Anzahl von Siloxaneinheiten und Alkoxygruppen wie das gewünschte Polysiloxan hat, 5 bis 60 Gewichtsprozent Alkohol und 0,001 bis 5 Gewichtsprozent saurem Katalysator, wobei sich die vorstehend genannten Prozentsätze jeweils auf das Gesamtgewicht von Polysiloxan, Alkohol und Katalysator beziehen, zum Sieden unter Rückfluß erhitzt wird.

## Claims

1. Process for the manufacture of polysiloxanes having hydrocarbon radicals bonded to silicon through oxygen, by reacting a halosilane with an alcohol and water in the presence of the desired polysiloxane, characterised in that the alcohol, the water and, if necessary, an acid catalyst that promotes the condensation of Si-bonded condensable groups are introduced continuosly into a still that is equipped with a column and, optionally, with a reflux condenser and that already contains the desired polysiloxane, in such amounts that the still always contains at least 5% by weight of alcohol and 0,001 to 5% by weight of catalyst, in each case calculated on the total weigt of the alcohol, catalyst and polysiloxane present in the still, the contents of the still are heated under reflux to boiling point, the halosilane to b reacted is introduced into the column at least 1 m above the lower end of the column, and the polysiloxane is drawn off continuously from the still in the same quantities as it is formed.

2. Process according to claim 1, characterised in that the alcohol is introduced into the still in such amounts that the still always contains a maximum of 60% by weight of alcohol, calculated on the total weigt af alcohol, catalyst and polysiloxane.

3. Process acccording to claim 1, characterised in that a mixture consisting of the desired polsiloxane, or a polysiloxane that has at least approximately the same number of siloxane units and alkoxy groups as the desired polysiloxane, 5 to 60% by weight of alcohol, and 0,001 to 5% by weight of an acid catalyst, each of the above-mentioned percentages being calculated on the total weight of polysiloxane, alcohol and catalyst, is heated under reflux to boiling point in the still, prior to introduction into the column of the halosilane to be reacted and prior to addition of the water to the still.

## Revendications

1. Procédé pour produire des polysiloxanes comportant des restes d'hydrocarbures reliés par de l'oxygène au silicium, par réaction d'un halogénosilane avec de l'alcool et de l'eau en présence du polysiloxane que l'on désire obtenir, procédé caractérisé en ce que, dans un ballon équipé d'une colonne et éventuellement d'un réfrigérant à reflux et qui contient déjà du polysiloxane voulu, on introduit constamment de l'alcool, de l'eau et, si nécessaire, du catalyseur acide accélérant la condensation de groupes condensables et liés à du silicium, en des quantités telles qu'il y ait dans le ballon au moins 5% en poids d'alcool et 0,001 à 5% en poids de catalyseur, chaque fois par rapport au poids total de l'alcool, du catalyseur et du polysiloxane présents dans le ballon; on chauffe le contenu de ce ballon à l'ébullition au reflux; on introduit dans la colonne, à un mètre au moins au-dessus de l'extrémité inférieure de celle-ci, de l'halogénosilane à faire réagir; et l'on retire constamment du ballon le polysiloxane à mesure de sa formation.

2. Procédé selon la revendication 1, caractérisé en ce qu'on introduit dans le ballon l'alcool en une quentité telle que le ballon contienne au maximum 60% en poids d'alcool, par rapport au poids total de l'alcool, du catalyseur et du polysiloxane.

3. Procédé selon la revendication 1, caractérisé en ce que, avant d'introduire dans la colonne l'halogénosilane à faire réagir et avant d'introduire l'eau dans le ballon, on chauffe à l'ébullition au reflux dans le ballon un mélange du polysiloxane voulu ou d'un polysiloxane contenant au moins approximativement le même nombre de motifs siloxanes et de groupes alcoxy que le polysiloxane que l'on désire obtenir, 5à 60% en poids d'alcool et 0,001 à 5% en poids de catalyseur acide, les pourcentages précités se rapportant à chaque fois au poids total du polysiloxane, de l'alcool et du catalyseur.